# EUROPEAN PATENT APPLICATION

(11) **EP 4 650 306 A1**
(43) Date of publication of application: **19.11.2025**
(21) Application number: 25174664.0
(22) Date of filing: 06.05.2025
(51) Int. Cl.: B65G 37/00, B65G 54/02, H02K 41/03

(54) **SHUTTLE DIVERTER FOR A LINEAR MOTOR CONVEYOR SYSTEM**

(30) Priority: 06.05.2024 US 202463642979 P
(71) Applicant: ATS CORPORATION, Cambridge, Ontario N3H 4R7 (CA)
(72) Inventor: Lambert, Blake Robert, Cambridge (CA); Beam, Daniel, Cambridge (CA); Hogan, Roger, Cambridge (CA); Kleinikkink, Albert John, Cambridge (CA)
(74) Representative: Noble, Nicholas

(57) **Abstract**

Shuttles (2008a-c) moving on a linear motor conveyor track (2002, 2004) can be diverted to another track by a rotating diverter (1710, 2006). The rotating diverter (1710, 2006) has a stationary frame (1808, 2018) that is coupled to the track. A rotating assembly (1814, 2014) is rotatably mounted within the stationary frame (1808, 2018) and comprises a diverter arm (1914, 2012) rotatably mounted within the rotating assembly (1814, 2014) to allow an angle of the diverter head (1916, 2010) relative to the rotating assembly (1814, 2014) to change as the rotating assembly (1814, 2014) rotates within the stationary frame (1808, 2018) and a diverter head (1916, 2010) comprising a switchable magnet (1832) engageable with a shuttle (2008a-c) on the track, the diverter head (1916, 2010) arranged at a first end of the diverter arm (1914, 2012).

## Description

### RELATED APPLICATIONS

The current application claims priority to US Provisional Application 63/642,979 filed May 6, 2024, entitled "Linear Motor Conveyor System," the entire contents of which are herein incorporated by reference in their entirety for all purposes.

### TECHNICAL FIELD

The present disclosure relates generally to linear motor conveyor systems. More particularly, the present disclosure relates to a linear motor conveyor system using an improved winding and magnet arrangement.

### BACKGROUND

Linear motor systems are becoming more and more common in conveyor applications. Linear motor conveyor systems operate at high speeds and accelerations, they provide independent control of moving elements, also referred to as shuttles, and provide precise positioning of the shuttles in relation to automation stations positioned on the linear motor conveyor system.

Linear motor conveyor systems may comprise multiple different tracks or track sections over which a plurality of shuttles move. Diverting shuttles between different tracks, or sections of track, requires detaching the shuttle from the first track or track section, moving the shuttle to the second track or track section and attaching the shuttle to the second track or track section.

An additional, alternative and/or improved mechanism for diverting shuttles between tracks or track sections is desirable.

The above information is presented as background information only to assist with an understanding of the present disclosure. No determination has been made, and no assertion is made, as to whether any of the above might be applicable as prior art with regard to the present disclosure.

### SUMMARY

In accordance with the present disclosure there is provided a diverter for a linear motor conveyor system comprising: a stationary frame coupled to a first track section the linear motor conveyor system; and a rotating assembly rotatably mounted within the stationary frame, the rotating assembly comprising: a diverter arm rotatably mounted within the rotating assembly to allow an angle of the diverter head relative to the rotating assembly to change as the rotating assembly rotates within the stationary frame; and a diverter head comprising a switchable magnet engageable with a shuttle on the first track section, the diverter head arranged at a first end of the diverter arm.

In a further embodiment of the diverter, the switchable magnet comprises at least one rotatable magnet that is rotatable between a first orientation and a second orientation, wherein in the first orientation, a magnetic force provided by the switchable magnet is sufficient to retain the shuttle on the diverter head and in the second orientation, the magnetic force is not sufficient to retain the shuttle on the diverter head.

In a further embodiment of the diverter, the at least one rotatable magnet is rotated by a gear on the diverter head contacting a pin fixed to the rotating assembly as the diverter head moves through an arc relative to the rotating assembly.

In a further embodiment of the diverter, the diverter further comprises a cam follower connected to the diverter arm, wherein the angle of the diverter arm relative to the rotating assembly is controlled by a cam follower connected to the diverter arm contacting a cam profile on the stationary frame.

In a further embodiment of the diverter, the cam follower moves along the cam profile as the rotating assembly rotates.

In a further embodiment of the diverter, the cam follower comprises a pair of rollers that contact the cam profile.

In a further embodiment of the diverter, the cam follower is connected to the diverter arm by a connecting rod arranged between the pair of rollers.

In a further embodiment of the diverter, the cam profile comprises a plurality of connected individual cam profiles providing a continuous cam profile for the cam follower as the rotating assembly rotates through 360°.

In a further embodiment of the diverter, the individual cam profiles comprise one or more of: a switching profile shaped to cause the angle of the diverter arm to rotate through an arc relative to the rotating assembly and toggle the switchable magnet at a point on the switching profile; and a stationary profile shaped to prevent toggling the switchable magnet.

In a further embodiment of the diverter, the rotating assembly further comprising: a compliance mount coupling the diverter arm to a driving shaft of the rotating assembly, the compliance mount providing compliance to movement of the diverter arm along one or more axes of movement.

In a further embodiment of the diverter, the compliance mount comprises a horizontal compliance mount allowing movement of the diverter arm along a radial direction of the rotating assembly.

In a further embodiment of the diverter, the horizontal compliance mount comprises: a pivot support for the diverter arm mounted to a linear bearing; and a biasing mechanism for biasing the pivot support in a bias direction along the linear bearing.

In a further embodiment of the diverter, the cam profile controls the movement of the pivot support along the bias direction.

In a further embodiment of the diverter, the compliance mount further comprises a vertical compliance mount allowing movement of the diverter arm along a vertical axis.

In a further embodiment of the diverter, the vertical compliance mount comprises a vertical biasing mechanism biasing the diverter arm in a vertical direction.

In a further embodiment of the diverter, the vertical compliance mount further comprises a vertical cam follower that contacts a vertical cam surface on the stationary frame to control vertical movement of the diverter arm in along the vertical axis.

In a further embodiment of the diverter, the stationary frame is rigidly connected to the first track section.

In a further embodiment of the diverter, the diverter head can remove the shuttle from the first track section and return the shuttle to the first track section.

In a further embodiment of the diverter, the stationary frame is coupled to a second track section and wherein the diverter head can remove the shuttle from the first track section and return the shuttle to the second track section.

In accordance with the present disclosure there is further provided a linear motor conveyor system comprising: a linear motor conveyor track; a plurality of shuttles on the linear motor conveyor track; and a diverter according to any of the diverters described above.

Other aspects and features of the present disclosure will become apparent to those ordinarily skilled in the art upon review of the following description in conjunction with the accompanying figures.

### BRIEF DESCRIPTION OF FIGURES

Embodiments of the present disclosure will now be described, by way of example only, with reference to the attached Figures.
Figure 1 is a schematic diagram of an example linear motor conveyor system;
Figure 2 illustrates a perspective view of an example track section and moving element of a linear motor conveyor system;
Figure 3 illustrates a perspective view of another example track section and moving elements of a linear motor conveyor system;
Figure 4A illustrates a perspective view of a track section frame;
Figure 4B illustrates a perspective view of a stator armature for the track section;
Figure 4C illustrates a perspective view of the track section frame with the stator armature installed;
Figure 5 is a front view of a moving element showing an arrangement of magnets;
Figure 6 is a schematic diagram of a Halbach array of a moving element according to an embodiment;
Figure 7 is a schematic diagram of a Halbach array according to another embodiment;
Figure 8 is a schematic diagram illustrating a Halbach array in a diverter;
Figure 9 is a schematic diagram illustrating the Halbach array of Fig. 8 in a different configuration;
Figure 10 is a schematic diagram of a Halbach array according to another embodiment;
Figure 11 is a cross-sectional view of a moving element with Halbach array according to an embodiment;
Figure 12 illustrates an example of a magnetic connector of a diverter tool interacting with a moving element;
Figure 13 illustrates another example of a magnetic connector of a diverter tool interacting with a moving element;
Figure 14 illustrates yet another example of a magnetic connector of a diverter tool interacting with a moving element;
Figure 15 is a schematic of a control architecture for a conveyor system, according to an embodiment;
Figure 16 illustrates a perspective view of a track section with a curvilinear profile;
Figure 17 depicts a linear motor conveyor system with multiple tracks and a shuttle diverter;
Figures 18A and 18B depict block diagrams of a shuttle diverter;
Figure 19A depicts a cam profile of a shuttle diverter;
Figure 19B depicts a cam follower and diverter arm moving along the cam profile;
Figure 19C depicts a movement of a gear for toggling a magnet;
Figures 20 and 21 depict portions a diverter for moving shuttles between tracks;
Figure 22 depicts the diverter of Figure 20;
Figures 23 and 24 depict a stationary frame of the diverter of Figure 22;
Figures 25 and 26 depict a rotating assembly of the diverter of Figure 22;
Figures 27 to 29 depict a compliant mount of the diverter of Figure 22;
Figures 30 and 31 depict details of the compliant mount of the diverter of Figure 22;
Figure 32 depicts details of a cam profile and cam follower of the diverter of Figure 22;
Figures 33 to 35 depict details of a magnetic diverter head of the diverter of Figure 22; and
Figures 36A and 36B depict details of a switchable magnet of the magnetic diverter head.

### DETAILED DESCRIPTION

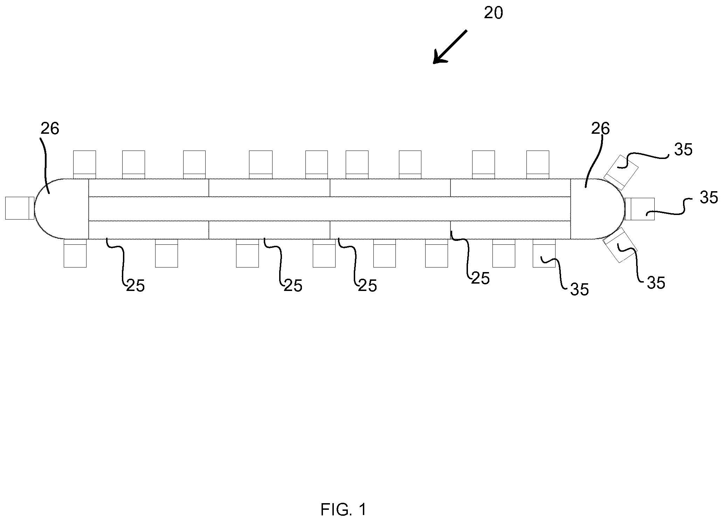

Figure 1 is a schematic diagram of an example linear motor conveyor system 20. The conveyor system 20 includes one or more track sections 25, 26 defining a track. In Fig. 1, modular straight track sections 25 are combined with modular curved track sections 26 to form ac loop. It will be understood that various other configurations will also be available and a loop is not required. A plurality of moving elements 35 are provided to the track and move around on the conveyor system 20. In a manufacturing environment, the moving elements 35 are intended to travel between automation stations (not shown) and may support a pallet or product (not shown) that is to be operated on automatically by, for example, a robot, while moving or while at an automation station. In some cases, the moving elements may travel to an automaton station or other work area intended for automatic or manual operations. Through the operation of the conveyor system 20 and automation stations, various operations are performed to provide for, for example, the assembly of a product. In this disclosure, the terms "moving element", "shuttle", and "pallet" may sometimes be used interchangeably.

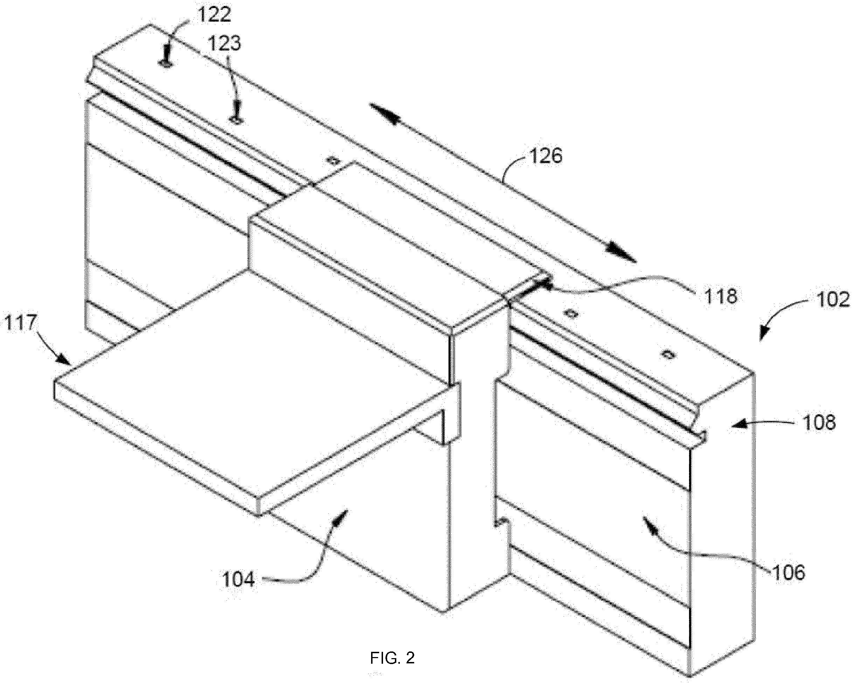

Figure 2 is a perspective view of an example track section 102 of the type used with the conveyor system 20. In this case, the track section 102 is shown with a moving element 104, which is configured to ride or travel along a track portion 106 of the track section 102. The moving element 104 may be any appropriate transport structure and may be configured to carry, support, or otherwise transport a support, such as, for example, a pallet, platform, carriage, staging, bed or the like. The track portion 106 includes a frame 108 configured to support the moving element 104. Some of the principles of operation of a similar track section are described in more detail in U.S. Patent No. 8,397,896 to Kleinikkink et al., which is hereby incorporated herein by reference.

As described above, the conveyor system 20 can be composed of a plurality of track sections 102 which are mechanically self-contained and quickly and easily separable from one another so as to be modular in nature. In general, the track sections 102 will be mounted on a support (not shown) so as to align and abut one another in order to form a longer track. In order to be modular, each track section 102 may house self-contained electronic circuitry for powering and/or operating the track section 102.

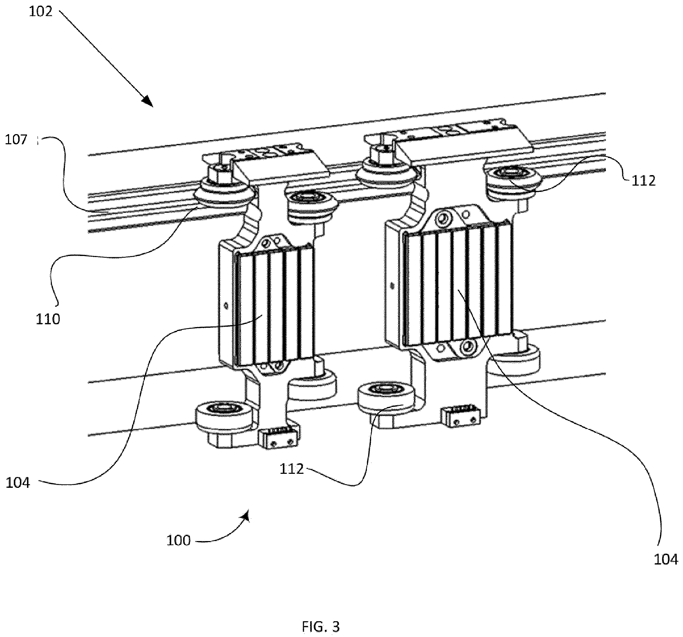

Figure 3 illustrates another example of a track section 102 and two moving elements 104, in which similar items are assigned the same reference numbers. In this example, the track section 102 includes a guide rail 107 located in an upper portion of track section 102, and the guide rail 107 has a shaped profile 110. There is also a lower guide rail 109 that, in this example, is flat but could also be shaped. The moving elements 104 include bearings 112 that are correspondingly shaped in order to run along a corresponding guide rail 107. The bearings 112 may be offset from each other such that, for a moving element 104 having two shaped bearings 112, each shaped bearing may run along a separate respective shaped profile 110.

Referring again to Figure 2, each moving element 104 can include a shelf, tooling plate, pallet, or the like117 for carrying various components. The moving element 104 can also include an extension 118 provided with a machine readable medium (not shown), which may be, for example, a magnetic strip, an optically receptive, transmissive or reflective strip, capacitive strip, color-coded strip, other type of feedback system or the like. The extension 118 is configured such that the machine readable medium 120 interacts with sensors 122, 123 provided to the track section 102. The sensors 122, 123 are configured to read the machine readable medium 120, whether magnetically, optically, or otherwise. The machine readable medium 120 and sensors 122, 123 form a position sensing system. The position sensing system may be arranged such that the position sensing system is protected from traffic on the track section 102 and dust and other debris. The position sensing system is used for position-tracking and identification of moving elements 104.

In this case, the sensors 122, 123 are located on the track section 102 and the machine readable medium 120 is located on the moving element 104. In an alternative, the sensors 122, 123 may be located on the moving element 104 and the machine readable medium 120 may be located on the track section 102. The sensors 122, 123 may also be configured to read an identifier of the moving element 104 from the machine readable medium 120.

In a linear motor conveyor system, the track section 102 produces a magnetic force for moving the moving element 104 along the track section 102. The magnetic force can also capture/hold the moving element 104 on the track section 102. In some cases, the magnetic force is created by the interaction of magnetic fluxes created by both coils (described herein) embedded in/under the track section and magnetic elements (described herein) provided to the moving element 104. The magnetic force can be thought of as having a motive force component for directing movement of the moving element 104 along a direction of travel on the track section 102, and a capturing force component to laterally hold the moving element 104 on the track section 102. In at least some linear motor conveyor systems, the motive force and the capturing force can be provided by the same magnetic force.

Generally speaking, the track sections 102 are mounted on a support structure (not shown) so as to align and abut one another in order to form a conveyor track. Further, as noted herein, each track section may be controlled by a control system or by a track section control system that controls a track section, a group of track sections, or all of the track sections.

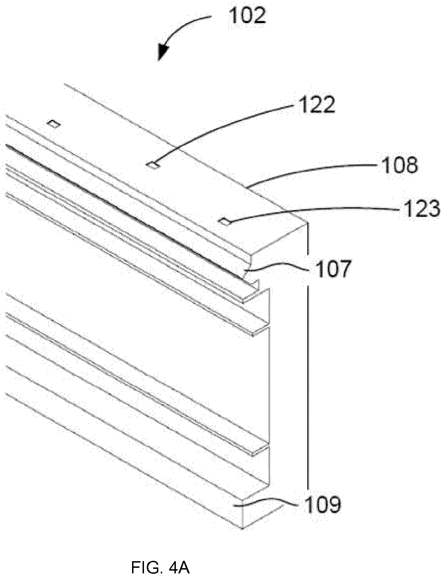

Figure 4A illustrates a perspective view of a frame 108 of the track section 102. The frame 108 includes a first guide rail 107 and a second guide rail 109 configured to support the moving element 104. In some cases, the first and second guide rails 107, 109 are designed such that the moving element 104 may be removed from the track 102 when a magnetic force is overcome.

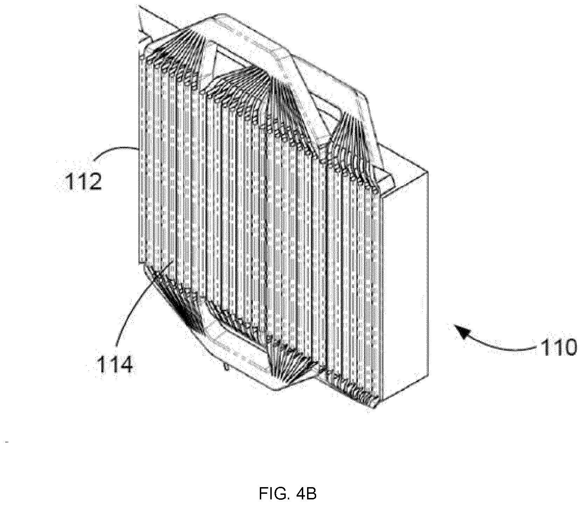

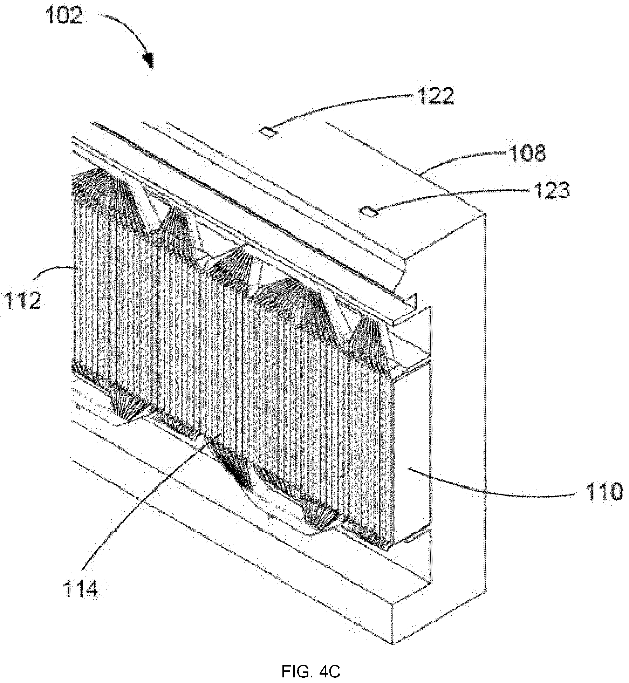

Figure 4B illustrates a stator armature 112 for fitting into the frame 108. Figure 4C illustrates the stator armature within the frame 108. The linear drive mechanism 110 is formed as a stator armature 112 including a plurality of embedded coils 114. The embedded coils 114 can be individually excited so that an electrically induced magnetic flux produced by the stator armature 112 is located adjacent to a given moving element 104 to be controlled, in a direction normal thereto, without affecting adjacent moving elements 104. The motive force for moving each moving element 104 arises from the magnetomotive force (MMF) produced between each moving element 104 and the stator armature 112, i.e., by the tendency of the corresponding magnetic fluxes provided by the stator armature 112 and moving element 104 to align. A controller (described herein) enables separate and independent moving MMFs to be produced along the length of the track section 102 for each moving element 104 so that each moving element 104 can be individually controlled with a trajectory profile that is generally independent of any other moving element 104. Structurally, the track section 102 may thus be broadly classified as a moving-magnet type linear brushless motor having multiple moving elements 104.

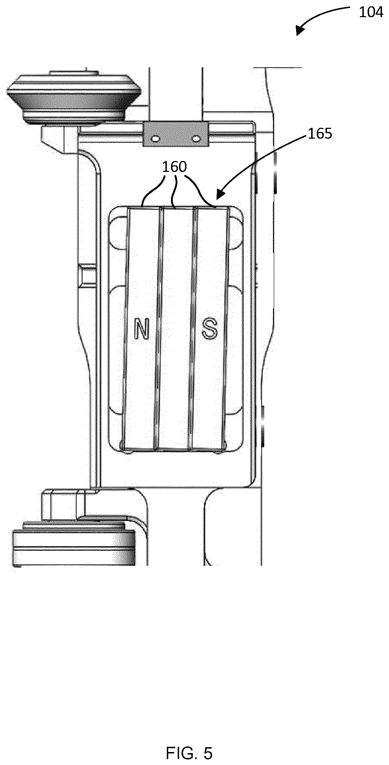

Figure 5 shows a moving element 104 when removed from the track 106. A conventional moving element 104 has a standard magnet 160 or magnets 160 arranged on an internal surface of the moving element. In this embodiment, the moving element 104 has a plurality of magnets 160 arranged in a Halbach array 165, as explained in further detail herein. Further, the magnets 160 can also be arranged at a slight angle (for example, 2 degrees, 3 degrees or the like - more particularly, the angle represents a horizontal distance of one stator tooth pitch between the top and bottom of the magnet such that the tooth pitch and the magnet length will determine the angle) in relation to the moving element such that the magnets are angled from orthogonal in relation to the direction of travel of the moving element. Angling the magnets can reduce or avoid the effect of "locking in" on particular stator elements ("teeth") in the linear motor, i.e. the tendency to have a magnet be attracted more strongly at a particular point along the motor than at other points and cause a slight jerk in the motion, sometimes called "cogging".

The Halbach array 165 of magnets 160 interact with the stator armature 112 and coils 114 in a corresponding adjacent track section 102 to move the moving element along direction 126 of Figure 2. A Halbach array is an arrangement of magnets that augments the magnetic field on one side of the array while reducing the field to near zero on the other side. The Halbach array involves an alternating arrangement of magnets to provide a particular spatial pattern of magnetization. In a linear motor, the Halbach array allows the magnetic field directed towards the track to remain strong in order to attract the moving element to the track and/or provide propulsion while also reducing the magnetic field away directed away from the track. This can be beneficial, for example, since there is less need of shielding or the like in embodiments where there may be sensitive equipment adjacent the track but on the outside edge of the moving element. The Halbach array can also provide better performance per mass than a non-Halbach array of magnets, particularly when using a ferrous (e.g. steel, iron, or the like) backplate/shield. In some cases, a non-ferrous backing material may be used for the Halbach array, for example, aluminum or the like. The Halbach array is also physically more compact for producing the same magnetic field which allows for smaller/lighter moving elements.

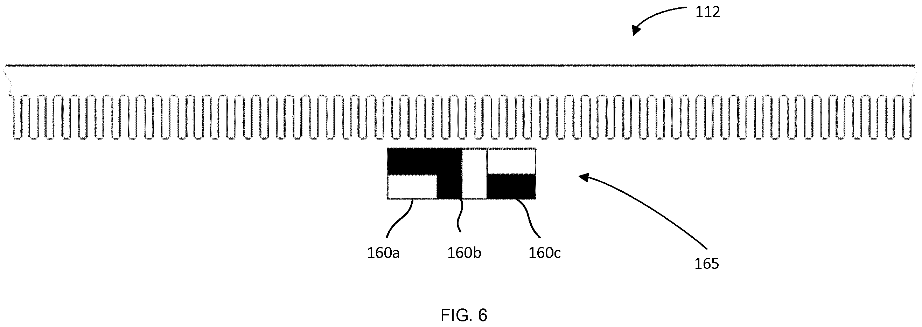

Fig. 6 illustrates a schematic diagram of the Halbach array 165 shown in Fig. 5. In Fig. 6, the Halbach array includes three magnets 160a, 160b, 160c configured to direct the magnetic field more strongly toward the stator armature 112 (linear motor). This arrangement can be referred to as a 2-pole array. The magnets 160a, 160b, 160c are arranged such that each dipole (black/white combination) is arranged rotated at 90° to each adjacent dipole along the direction of movement. In this particular arrangement, the two outer magnets 160a, 160c are oriented toward/away from the motor and opposite of one another. The center magnet 160b is oriented perpendicular to the outer two. In this orientation the net magnetic field is almost entirely on the side of the stator armature 112.

In some cases, the Halbach array can offer additional benefits when provided with a rotatable middle magnet 160b. For example, in scenarios where a moving element requires manual removal from a track, the middle magnet's magnetic poles can be reversed (through a rotation of 180 degrees). By doing so, the magnetic attraction between the moving element and the track is significantly reduced and, thus, substantially disabled, facilitating easy manual removal of the moving element. As another example, when an operator needs to manually install a moving element on a track, the reduced magnetic attraction force between the moving element and the track can simplify the installation process. After installation is complete, the operator can rotate the middle magnet 160b to strengthen the magnetic force between the moving element and the track.

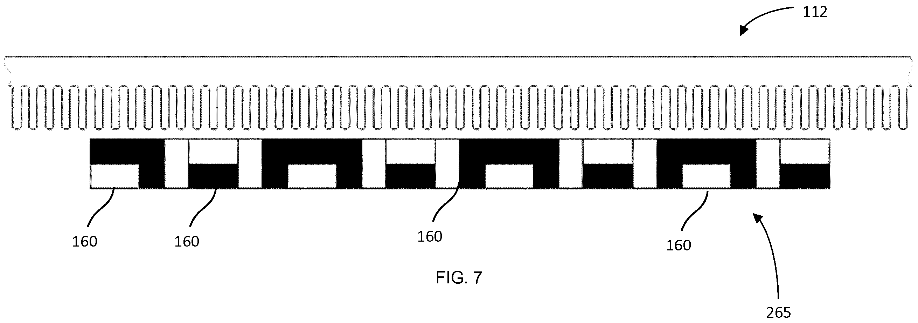

Fig. 7 illustrates a schematic diagram of another embodiment of a Halbach array 265 having additional dipoles. This arrangement can be referred to as an 8-pole array. A larger number of poles can be used to increase the magnetic attraction for larger payloads, forces, or the like. It will be understood that the Halbach array may include any quantity of poles, whether between 2 and 8 or otherwise. It will be understood that the Halbach array may include any quantity of poles, whether between 2 and 8 or otherwise.

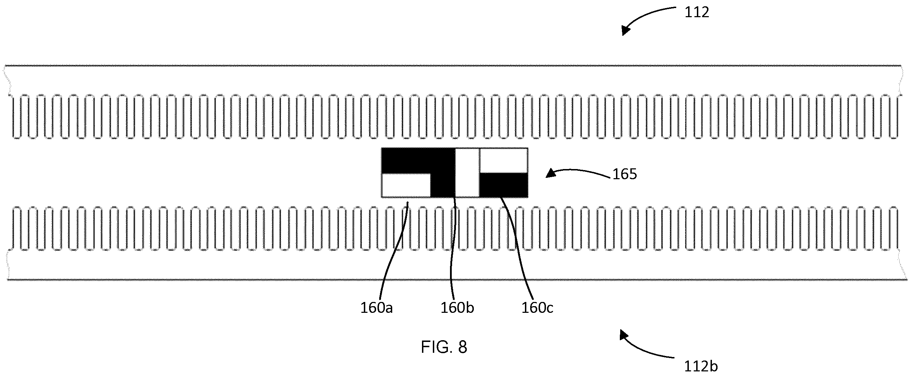

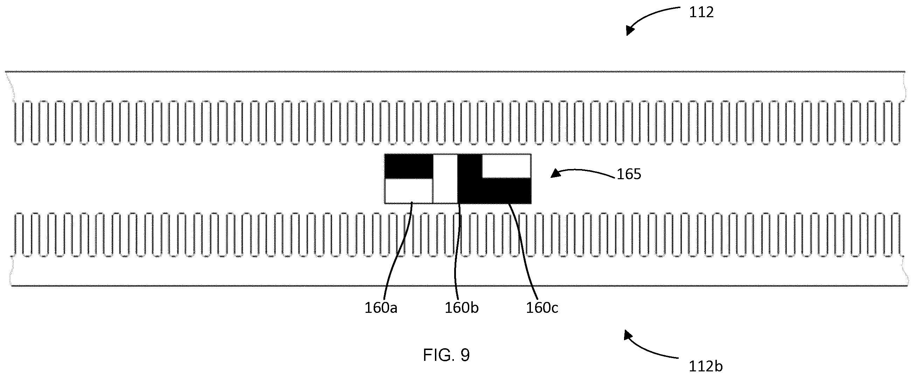

Fig. 8 illustrates a schematic diagram of the Halbach array 165 of Fig. 6 but with an additional second stator armature 112b on an opposite side of the moving element which includes the Halbach array 165. In this case, as the majority of the magnet field of the Halbach array 165 is directed towards the first stator armature 112, the Halbach array 165 (and therefor moving element 104) will not be significantly affected by the second stator armature 112b. However, by reversing the magnetic poles (in this case, rotating) the middle magnet 160b, as shown in Fig. 9, the magnetic field can be adjusted to be stronger on the side of the second armature 112b. That is, when the orientation of the middle magnet 160b is reversed (e.g. by physically rotating 180°) the magnetic field inverts such that the net field is almost zero on the first stator armature 112 side and is almost entirely on the second stator armature 112b side. Effectively, this turns off the attraction toward the first stator armature 112, leading to the moving element being controlled by the second stator armature 112b, rather than the first stator armature 112. This allows the moving element to be diverted from one track to another track by rotating the middle magnet (sometimes referred to herein as "the Halbach magnet") and, where and if necessary, appropriately controlling the stator armatures/linear motors on each side.

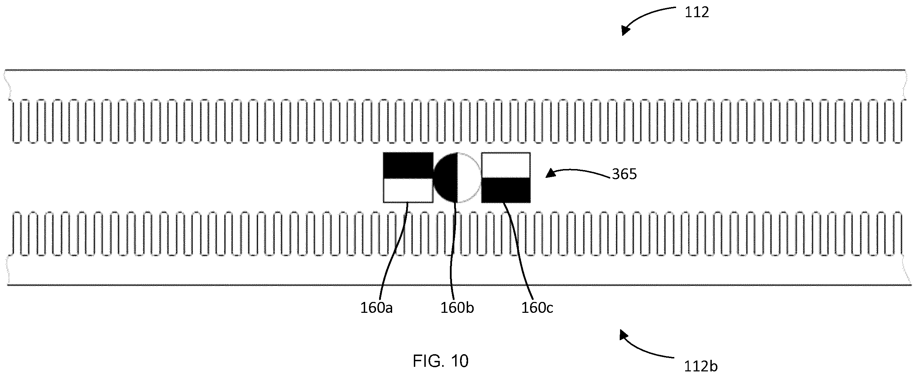

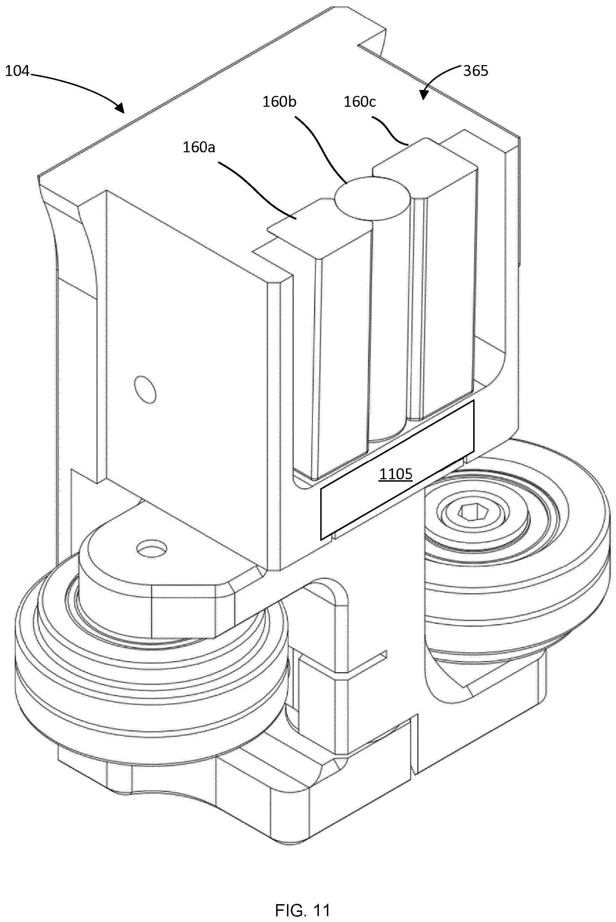

Fig. 10 illustrates a schematic diagram of another embodiment of a Halbach array 365 in which the middle (Halbach) magnet 160b is a cylindrical shape (circular when viewed from above). The use of a circular shaped Halbach magnet can allow for easier rotation of the Halbach magnet when adjusting the direction of magnetic field strength. Fig. 11 illustrates a cross-section of a moving element with the Halbach array 365. In this arrangement, the outer magnets 160a, 160c are shaped to match with the circular shape of the Halbach magnet 160b. It will be understood that other shapes of magnets may be used in the Halbach array depending on the implementation details. Also, as noted above, the Halbach array may include any number of magnets (poles) to allow for varying sizes, strengths, and the like. For example, Fig. 3 illustrates two sizes of moving elements that may include a different number of magnets in the Halbach array.

In these various embodiments, the Halbach magnet 160b can be rotated in various ways, for example, mechanically or electromagnetically. In a mechanical arrangement, various arrangements can be provided. For example, a stepper motor may be connected with the Halbach magnet 160b, either directly or via mechanical gears or linkages. In Fig. 11, a stepper motor 1105 is provided to the moving element 104, in this case, below the Halbach magnet 160b, and directly connects to the Halbach magnet 160b. In this case, the stepper motor 1105 can be powered by power on pallet technology such as that disclosed in, for example, US9333875, US10300793, and US20220315357A1. In another example, mechanical gears or linkages can be provided to the Halbach magnet 160b and interact with a mechanical system, possibly including a stepper motor, cam, or the like, on another part of the moving element or on the track to rotate/toggle the Halbach magnet 160b. Overall, the Halbach magnet 160b can be rotated/toggled at an appropriate timing for diverting, transferring or removing the moving element.

In an electromagnetic arrangement, the Halbach magnet 160b may be configured to be freely rotating (within a range of friction) and can then be rotated/toggled via exposure to an external magnetic field. In this case, the external magnetic field will overcome any friction and can operate to move the Halbach magnet 160b to orient itself to align with that external magnetic field. The Halbach magnet 160b can be configured so that even when the external magnetic field is removed, the orientation remains. A second external magnetic field can then be applied to toggle the Halbach magnet 160b back. As above, overall, the Halbach magnet 160b can be rotated/toggled at an appropriate timing for diverting, transferring or removing the moving element.

In some cases, either mechanical or electromagnetic, the Halbach magnet 160b may be adjustable through a range of positions rather than a toggle between two different directions. In general, a method of controlling a directional strength of a magnetic field of a Halbach array of magnets may include determining a direction in which the magnetic field of the Halbach array should be directed; and providing a mechanical signal or an electromagnet pulse to the Halbach magnet in the Halbach array sufficient to rotate the Halbach magnet such that the magnetic field of the Halbach array is oriented in the determined direction.

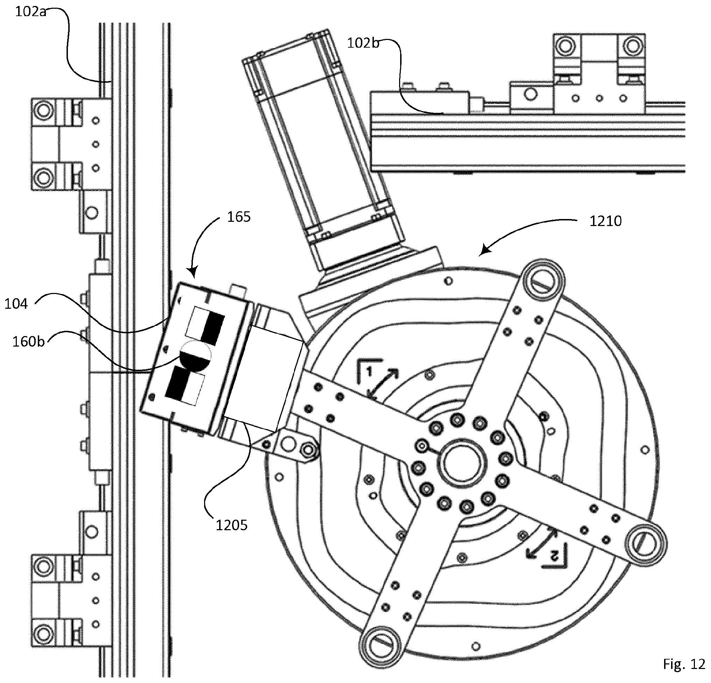

As briefly described above, it is noted that a Halbach array and/or rotation of the Halbach magnet can also be used for removing or transitioning a moving element from a track in other ways, for example, by a magnetic connector/tool that can be brought adjacent the moving element to remove the moving element for maintenance or the like or for transitioning the moving element in an automation system. In particular, the Halbach array 165 can be configured such that the Halbach magnet 160b can be rotated to cause the moving element to be more strongly attracted to the magnetic connector. As illustrated in Fig. 12, a magnetic connector 1205 may be fitted on a diverter tool 1210 that transitions the moving element 104 from one track 102a to a second track 102b. In Fig. 12, the moving element 104 includes a Halbach array 165 and, in some cases, the Halbach magnet 160b may be rotated to assist with removing the moving element 104 from the first track 102a and placing the moving element 104 on the second track 102b. In particular, when the Halbach magnet 160b is in one position the magnetic field will be configured such that the moving element will be more attracted to the track and less attracted to or not attracted to the magnetic connector, and, when the Halbach magnet 160b is in a second position (rotated position), the magnetic field will be formed such that the moving element will be more attracted to the magnetic connector 1205/diverter tool1210 and less attracted to or not attracted to the track. This can then be reversed to transfer the moving element from the magnetic connector 1205/diverter tool 1210 back to the track, or to release the moving element from the magnetic connector 1205/diverter tool 1210.

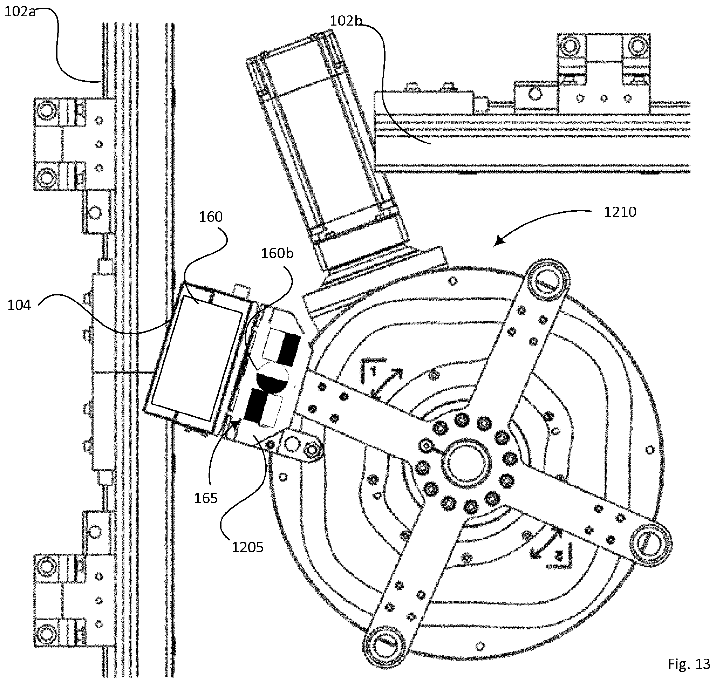

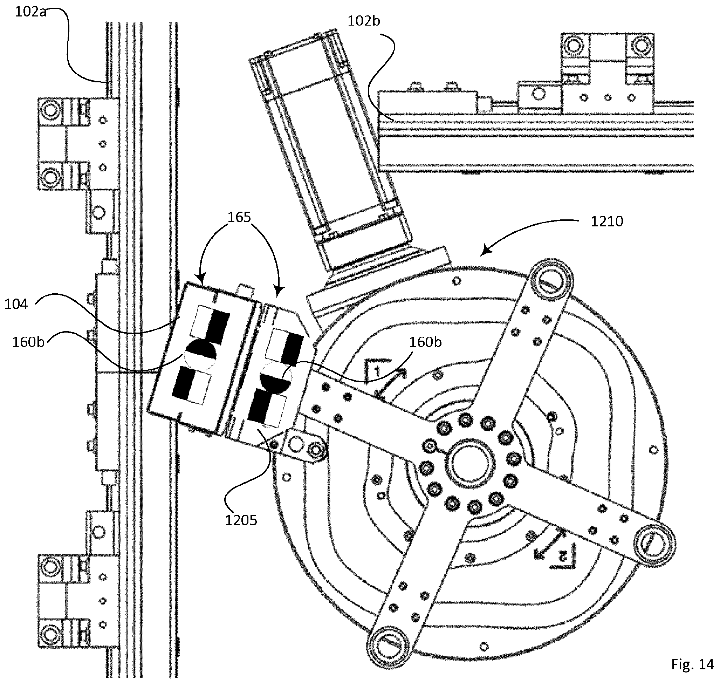

Further, as illustrated in Fig. 13, an alternative arrangement may involve the moving element 104 having a conventional magnet (or magnet array) 160 while the magnetic connector 1205 is provided with a Halbach array 165 (i.e. a diverter Halbach array). In some cases, the Halbach magnet 160b of the diverter Halbach array 165 may be rotatable to adjust the strength of the magnetic field produced by the magnetic connector 1205. As illustrated in Fig. 14, there may also be situations where each of the moving element 104 and the magnetic connector 1205 are provided with a Halbach array 165 (i.e. moving element Halbach array and diverter Halbach array, respectively). In this case, either one or both of the Halbach magnets 160b can be adjusted (rotated) to change the magnetic field strength between the moving element 104 and the magnetic connector 1205.

It will further be understood that, rather than a diverter tool, the magnetic connector 1205 may be fitted on a removal tool for removing the moving element 104 from the track 102, for example, for maintenance, adjusting the number of moving elements, or the like.

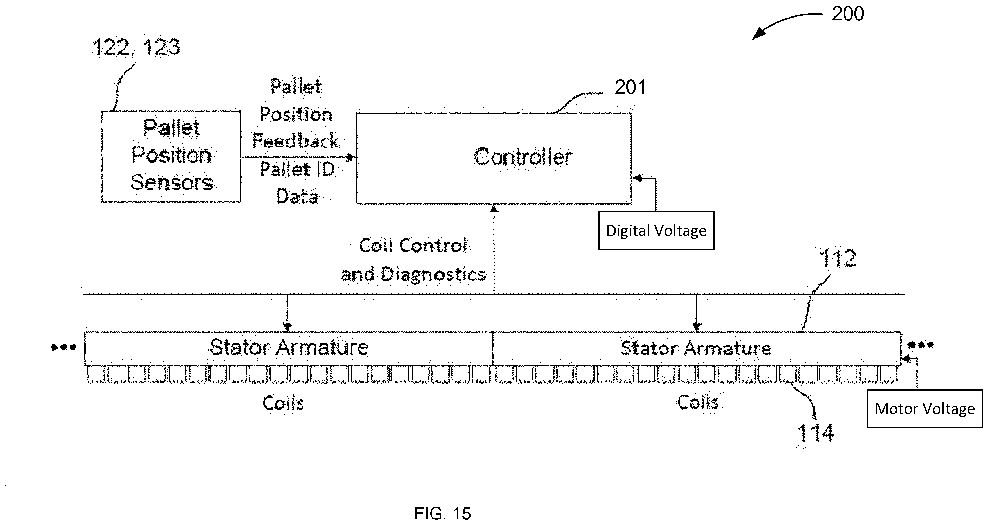

Figure 15 is a block diagram of an embodiment of a control architecture 200 employed in the conveyor system 100. A controller 201 controls at least a zone of the conveyor system 100 and the track section 102 used in the zone of the conveyor system 100. A zone may include any number of coils. The coils may be grouped into 'motors'. In a particular example, a motor may include twenty interleaved coils. The motors may be equivalent in length to track sections 102; however this is not required as motors can include coils from more than one, or less than one, track section 102. The zone controller 201 may be used to interface with users of the system. The zone controller 201 is configured to monitor moving element 104 positions and control the movement of moving elements 104 to go to desired destinations based on the moving element 104 position. As such, the zone controller 201 can be used for process (i.e. manufacturing-line) control. The zone controller 201 may also provide a supervisory diagnostic role by monitoring the track sections 102 (e.g., by engaging in a continuous polling or pushing process) in order to determine the current status of any track section 102 and whether any track section 102 has failed. It will be understood that, in some cases, the zone controller 201 may directly control each of the track sections 102 or each of the motors.

The zone controller 201 may also be connected to other devices, such as programmable logic controllers (PLCs) (not shown) via input/output (I/O), network modules, software modules, Ethernet connections, or the like. The PLCs may provide manufacturing-line station-processing instructions to the zone controller 201, such as directing the next destination for a moving element 104 along the track 102, or providing station-specific motion instructions in respect of a given moving element 104.

As illustrated, the zone controller 201 is operatively connected to the stator armature 112 and coils 114 in the track sections 102 and controls the coils 114 in accordance with an independent trajectory or "move" command for each moving element 104 located therein.

The zone controller 201 is also operatively connected to the sensors 122 situated in the track section 102. The zone controller 201 is used to implement a closed-loop digital servo control system that controls movement of the moving element 104 by resolving the real-time position of each moving element 104 located in the track section 102. When the machine readable medium 120 of a given moving element 104 moves over a given sensor 122, moving element 104 position feedback is transmitted to the zone controller 201. The zone controller 201 decodes the moving element 104 position feedback to determine the position of the moving element 104.

The zone controller 201 provides processing for sampling the sensors 122, 123 and resolving the position of each moving element 104 located in the associated track section 102. Broadly speaking, the processing associates the machine readable medium 120 of any given moving element 104 with the identified sensors 122, 123 at any time so that a position, relative to the track section 102, of the given moving element 104 can be calculated based on a fixed position of the associated sensor 122 or 123 and a relative position of the machine readable medium 120 in relation to the associated sensor 122 or 123. In addition, when the machine readable medium 120 simultaneously engages a plurality of sensors 122, 123, the processing transfers or hands-off the association or "ownership" of the moving element 104 from the current sensor 122 or 123 to an adjacent engaged sensor 122 or 123. In this manner, the position of an identified moving element 104 relative to the track section 102 can be continuously tracked.

Those skilled in the art will appreciate that the position sensing system may be magnetic, optical, color optical, capacitive, or may be another alternative system. For example, the machine readable medium can be a magnetic strip and the sensors 122, 123 can be corresponding magnetic detectors. In some cases, the machine readable medium can be configured to provide 1 micron or better resolution. The position accuracy of the moving element 104 is generally dependent on the resolution of the position sensing system.

In some embodiments herein, the controller 201 can also control the mechanical or electromechanical arrangement used for rotating the Halbach magnet 160b to change the direction of focus of the magnetic field generated.

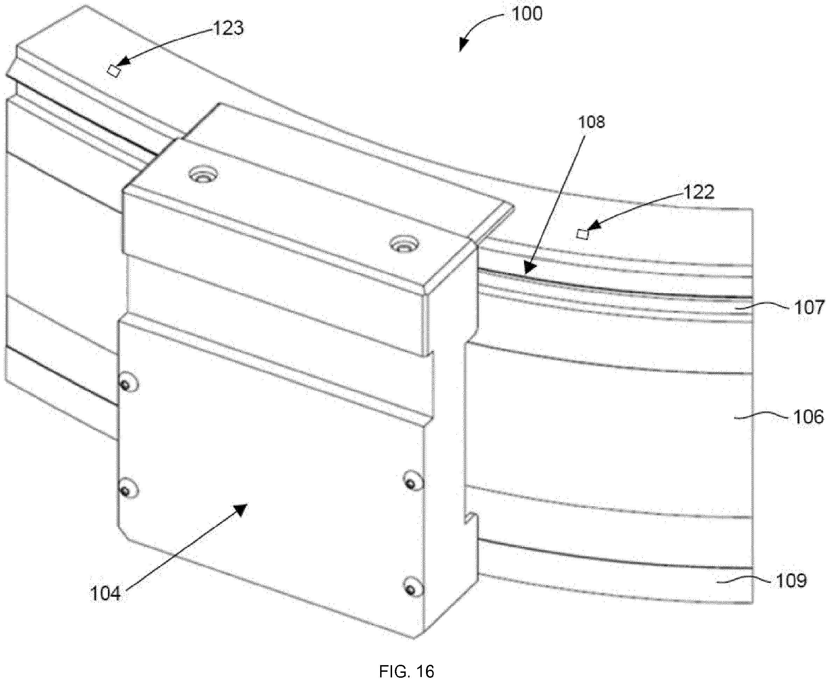

Figure 16 illustrates a conveyor system 100 having a curvilinear profile. Where the track section 102 is curvilinear, the sensors 122, 123 are positioned along the curvilinear profile such that the machine readable medium 120 can be read by the sensors 122, 123 and the readings can then be translated from the curvilinear profile to a linear profile, using linear units such as microns, for the purposes of feedback control. Control of the moving element 104 may then occur in the linear profile/linear units. It will be understood that the principles of operation of the Halbach array can be used on curvilinear track sections as well as straight track sections.

As described above, a diverter can move a shuttle from one track, or track section, to another track or track section. One embodiment described above uses a switchable magnetic array arranged in a shuttle connector to attract, and retain, a shuttle on a first track to the connector. The connector can rotate in order to position the shuttle retained on the connector adjacent to the second track. The switchable magnet can be toggled in order to release the shuttle from the connector. The shuttle can be magnetically attached to the second track when released from the connector. While the diverter embodiments described above can be used to divert shuttles between tracks or track sections, it may require precise alignment of the components in order to function properly. For example, the different track sections should be precisely aligned so that their respective tracks are at the same height as each other. Similarly, the distance between the diverter and tracks may need to be precisely controlled. Such arrangements can make the installation and configuration of the linear motor conveyor system more difficult, requiring more time and skill to properly configure the system.

A rotatable diverter is described further below that uses a cam plate in order to adjust the alignment of a diverter head relative to the tracks as the diverter rotates. The cam plates can be rigidly mounted to the track sections in order to simplify the alignment of the diverter to the tracks. Further, the diverter may include a compliant mounting structure that provides movement of the diverter head in a radial direction and vertical direction.

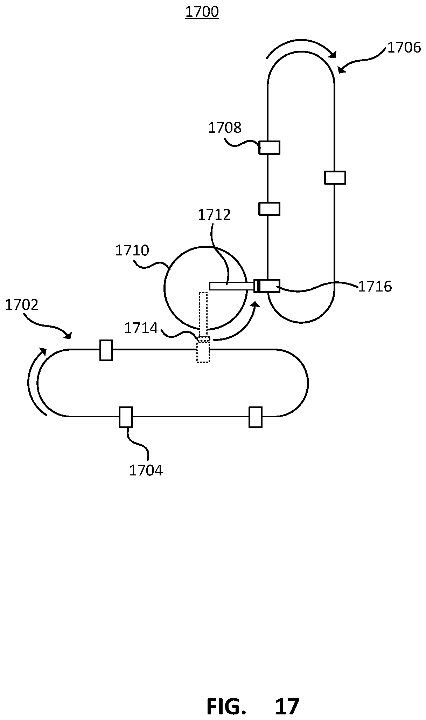

Figure 17 depicts a linear motor conveyor system with multiple tracks and a shuttle diverter. The system 1700 comprises a first linear motor conveyor track 1702 with a plurality of shuttles 1704 moving along the track. A second linear motor conveyor track 1706 is arranged in proximity to the first track 1702. A second plurality of shuttles 1708 move along the second track. A rotating diverter 1710 is arranged adjacent to the first and second tracks. The rotating diverter comprises a diverter arm 1712 that has a diverter head at one end. The diverter head has a switchable magnet in the diverter head. The rotatable diverter rotates the diverter arm from a first orientation, depicted by the stippled lines 1714, in which the diverter head is aligned with a shuttle on the first track. The switchable magnet of the diverter head can be toggled in order to retain the shuttle on the diverter head as it rotates to the second position 1716 in which the shuttle is moved to the second track. The switchable magnet of the diverter head can be toggled in order to release the shuttle from the diverter head. The shuttle can be attracted to and retained on the second track. The rotatable diverter is depicted as having a single diverter arm. The diverter may have a plurality of diverter arms. Further, which the two tracks are depicted as separate tracks, it is possible that the diverter moves shuttles between different portions of a single track. Although not depicted in detail in Figure 17, the diverter arm is pivotally mounted to a rotating assembly of the diverter. The pivotal connection allows the angle of the diverter head relative to the rotating assembly to change as the rotating assembly rotates within the stationary frame. Pivoting of the diverter head can allow the diverter head to be aligned with the shuttle being diverted as the rotating assembly rotates.

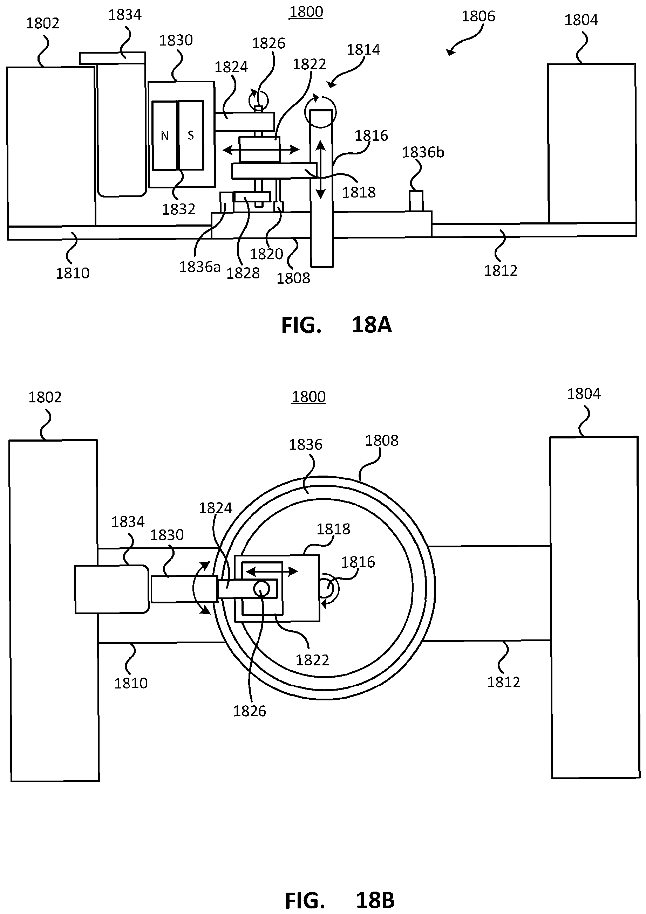

Figures 18A and 18B depict block diagrams of a shuttle diverter. Figure 18A depicts a side view of the shuttle diverter and Figure 18B depicts a top view of the shuttle diverter. The system 1800 comprises a first track 1802 and a second track 1804. A rotatable shuttle diverter 1806 is arranged adjacent the two tracks in order to move a shuttle from the first track to the second track, or vice versa. The rotatable shuttle diverter comprises a stationary frame 1808. The stationary frame can be rigidly connected to the first track by a first connection plate 1810. Similarly a second connection plate 1812 rigidly connects the stationary frame to the second track. Rigidly connecting the tracks to the stationary frame allows the diverter and the tracks to be easily aligned. Further, the connection plates can provide a common reference surface for aligning components of the diverter to the tracks.

A rotating assembly 1814 is rotatably mounted within the stationary frame. A drive shaft 1816 can be mounted in the stationary frame and driven by a motor (not shown). The drive shaft 1816 can continuously rotate through 360°. A compliant mount can be coupled to the drive shaft and rotated with the shaft. The compliant mount may include a mounting plate 1818 that can move vertically. The mounting plate may be biased upwards or downwards by a biasing mechanism (not shown). A vertical bearing 1820 can be connected to the mounting plate 1818 and can bear against a vertical cam surface. The vertical cam surface and the vertical bearing can ensure that the vertical alignment of the mounting plate relative to the first and second tracks is maintained. If for example, the second track is mounted somewhat higher than the first track, the rigid connection plate 1812 will align a portion of the stationary frame 1808 such that the vertical cam surface on the stationary frame in the vicinity of the second track will also be raised relative to the vertical cam surface in the vicinity of the first track. When the vertical bearing 1820 rides over the vertical cam surface in the vicinity of the second track, the vertical bearing causes the mounting plate 1812 to rise and maintain the vertical alignment to the second track.

In addition to the vertically compliant mounting plate, a horizontally compliant mounting block 1822 provides radial, or horizontal in Figure 18A, movement to a diverter arm 1824 that is pivotally coupled to the mounting block 1822. The pivotal connection may be provided by a pivot rod 1826 that can pass through the mounting block. The connection through the mounting block may be provided by one or more bearings. A cam follower 1828 is connected to the pivot rod 1826 suck that when the cam follower 1828 rotates the pivot rod rotates and the diverter arm rotates. A diverter head 1830 is arranged at the end of the diverter arm. A switchable magnet 1832 is arranged within the diverter head. When the switchable magnet is 'on' the magnetic force is sufficient to attract and retain the shuttle 1834 from the track onto the diverter head. When the switchable magnet is 'off', the magnetic force is not sufficient to retain the shuttle on the diverter head and as such, when toggled off in the vicinity of a track, the shuttle may be attracted to and retained by the track. As depicted, the diverter arm can rotate through an arc relative to the mounting plate 1818. The rotation of the diverter arm, and so the diverter head, allows the diverter head to be aligned correctly to the shuttle at a point where the shuttle is transferred to the diverter head. The rotation of the diverter arm is controlled by the cam follower 1828 and individual cam profiles 1836a, 1836b.

Individual cam profiles 1836a, 1838b can be arranged on the stationary frame. The individual cam profiles 1836a, 1836b can be arranged adjacent respective track sections. The cam profiles cause the cam follower and the diverter arm to rotate through an arc relative to the mounting plate as it rotates about the driving shaft 1816. As depicted in Figure 18B, the individual cam profiles can be connected together to provide a continuous cam profile that the cam follower can contact throughout the full rotation of the rotating assembly. Further, the cam profiles may also cause the mounting block 1822 and so the diverter arm, to move radially. That is, the radial distance of the cam profile from the drive shaft determines a distance between the mounting block 1822 and the drive shaft. Since the cam profiles 1836a, 1836b can be fixed to the stationary frame, which in turn is rigidly connected to the tracks, the radial position of the diverter head relative to the tracks can be precisely controlled.

The switchable magnet in the diverter head may be toggled on/off when the shuttle is to be removed from or provided to a track. The switchable magnet may be toggled by rotating one or more magnets in the diverter head. The rotation can be provided in various ways including using a motor in the diverter head. Alternatively, the rotation can be provided by a mechanical means. As the diverter arm rotates through the arc, it can cause a gear to contact a stationary, relative to the mounting plate 1818, pin or similar feature. As the diverter arm continues through the arc, the gear can rotate by contacting the pin. The rotation of the gear can cause the one or more magnets to rotate in the diverter head and toggle the magnetic switch on or off.

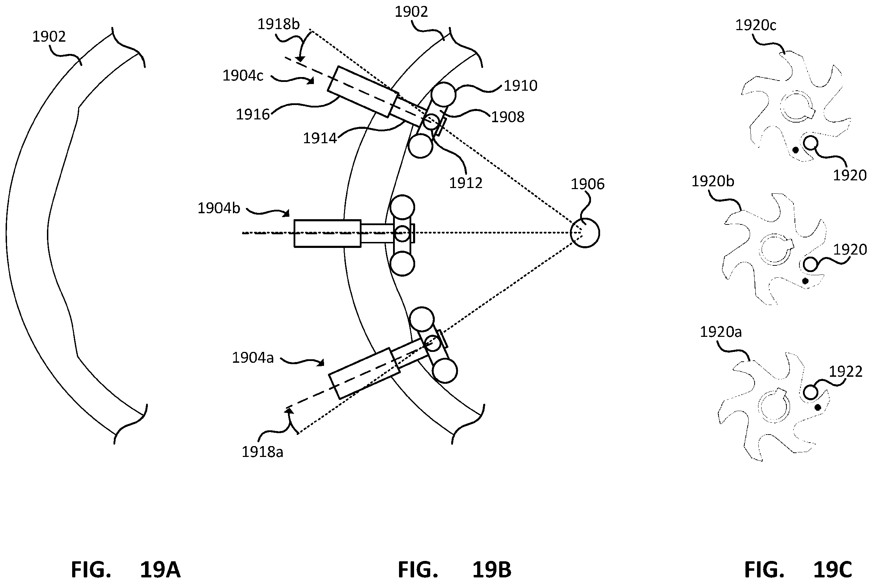

Figure 19A depicts a cam profile of a shuttle diverter. The cam profile 1902 may be mounted relative to one of the track sections in which a shuttle should be removed from or provided to a track. Figure 19B depicts rotation of a diverter head through multiple locations 1904a..c. Components of the rotatable diverter are omitted from Figure 19B for clarity of the Figure. The drive shaft 1906 rotates and causes a cam follower 1908 to rotate along the cam profile. The cam follower 1908 comprises two contact bearings 1910, 1912 which contact the cam profile. As depicted, the cam profile is shaped such that as the drive shaft rotates, the angle of the cam follower relative to the rotation angle of the drive shaft, changes. The diverter arm 1914, and diverter head 1916 is connected to the cam follower and rotates with the cam follower. As depicted between first orientation 1904a and the last orientation 1904b, the angle of the diverter head relative to the drive shaft changes as depicted by angles 1918a, 1918b. This movement of the diverter arm relative to the drive shaft can be used to rotate a gear. As depicted in Figure 19C, a gear, which may be a Geneva gear or other type of gear, may be mounted to the diverter head. The gear is depicted in different orientations 1920a, 1920b, 1920c corresponding to the orientation of the diverter head orientations 1904a, 1904b, 1904c in Figure 19B. As the diverter head rotates through the arc, the gear can contact a stationary pin or feature 922. The pin is stationary relative to the drive shaft. As the diverter rotates, the stationary pin causes the gear to rotate as depicted in 1902b, 1902c. The rotation of the gear can cause magnets in the diverter head to rotate which can toggle the switch on and off. It is noted that each time a tooth of the gear engages on the pin and is rotated through the arc, the switchable magnet can be toggled on or off. If the gear depicted in 19C is used to toggle the switchable magnet, the rotation of the diverter should only rotate in one direction as the gear only engages the pin in one direction.

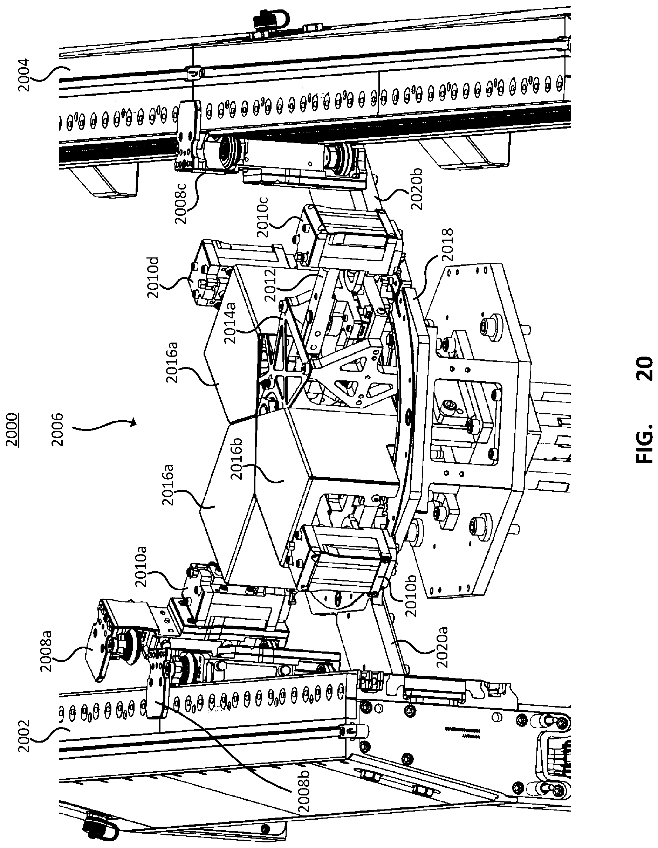

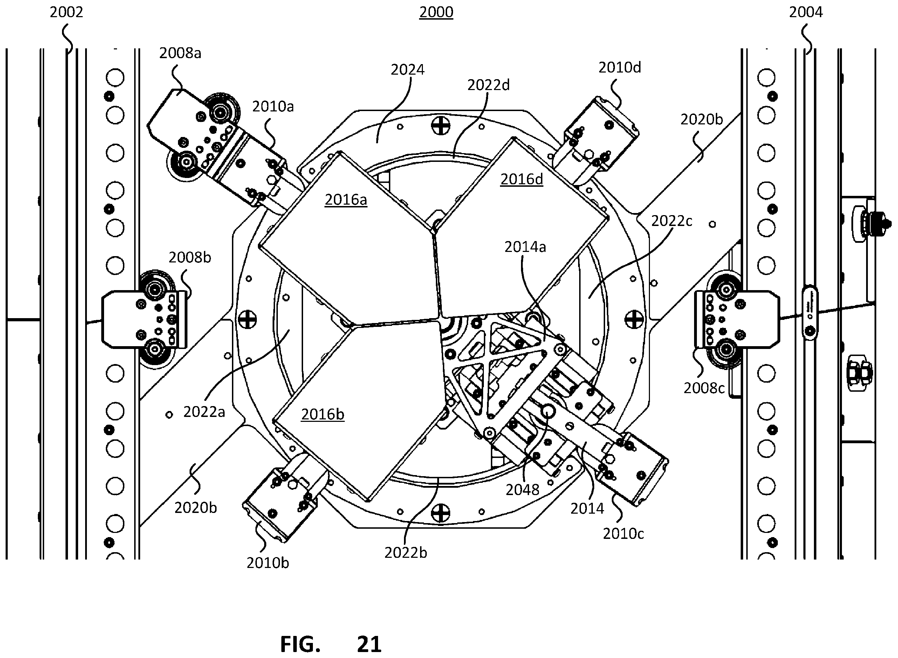

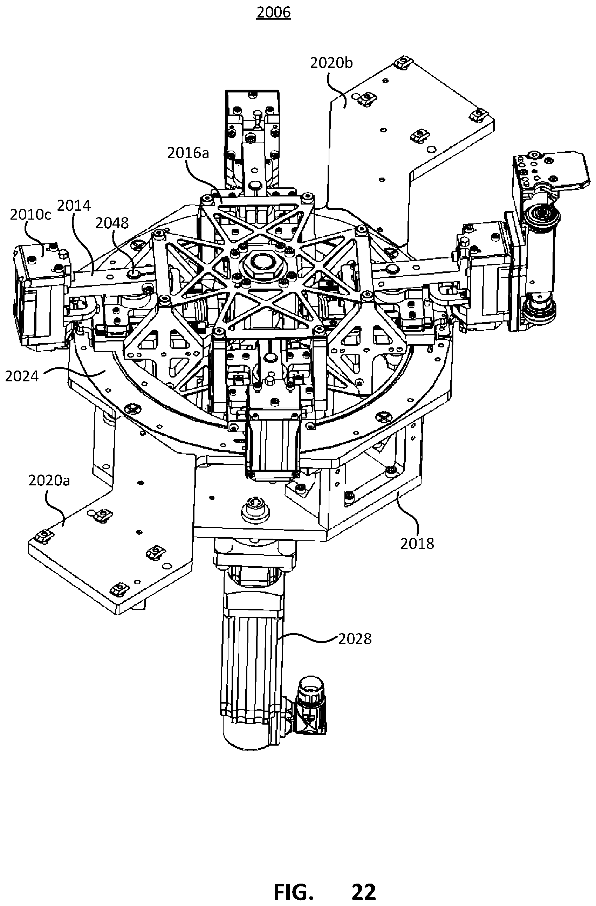

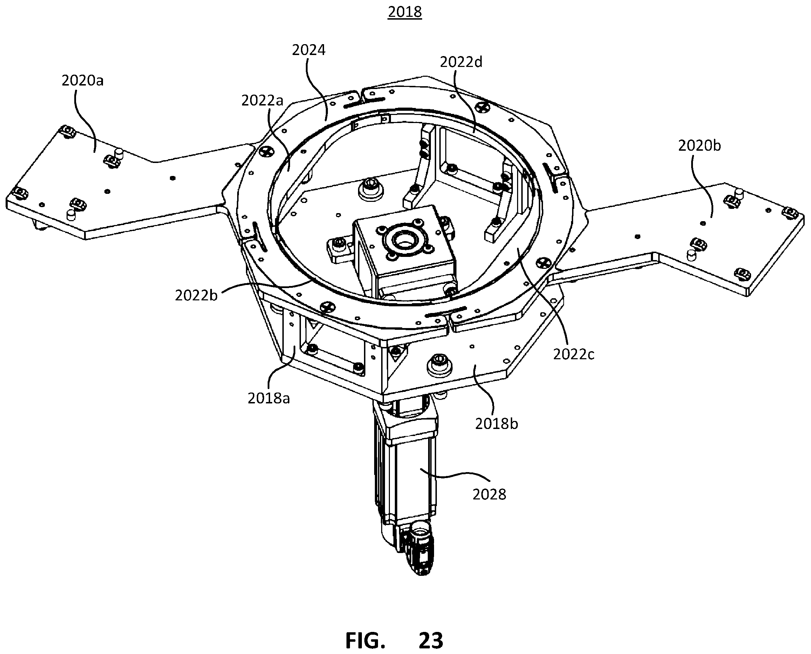

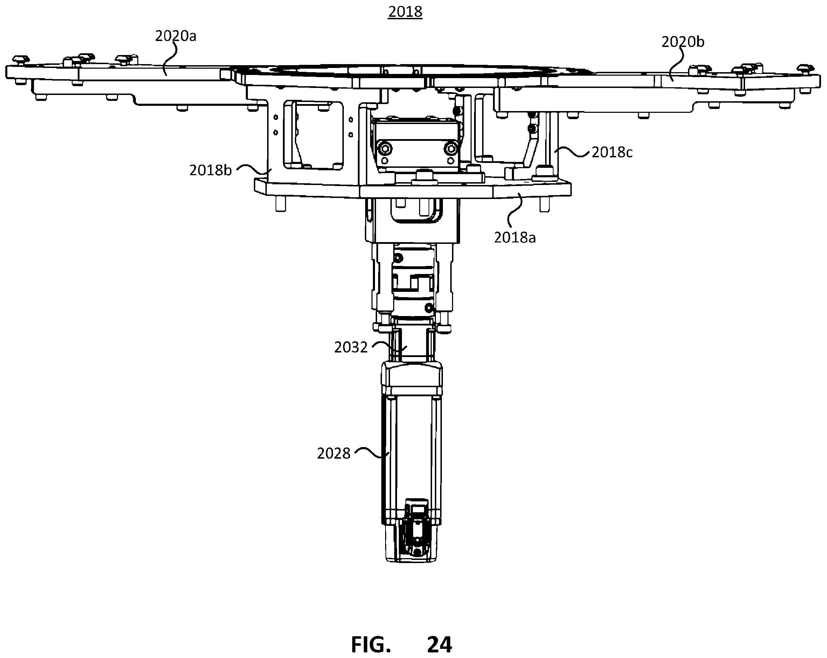

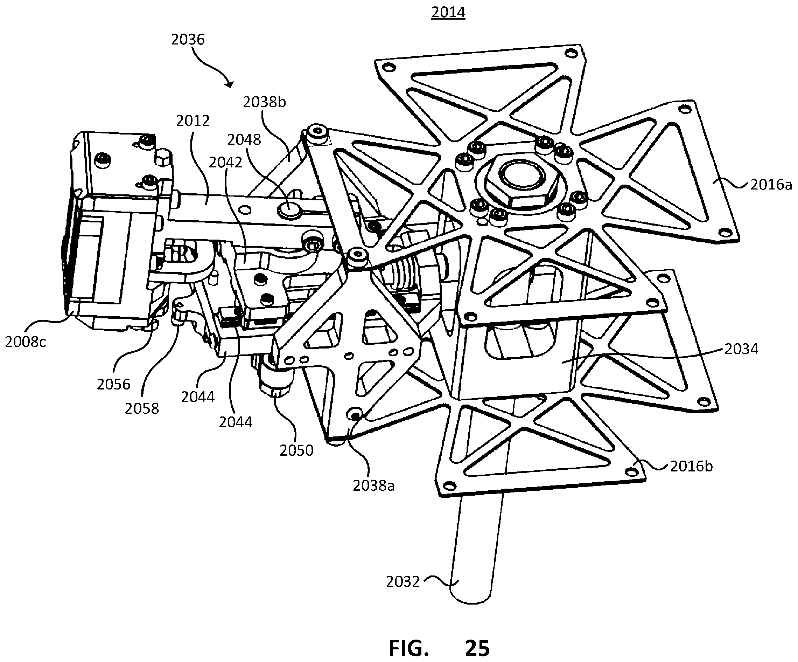

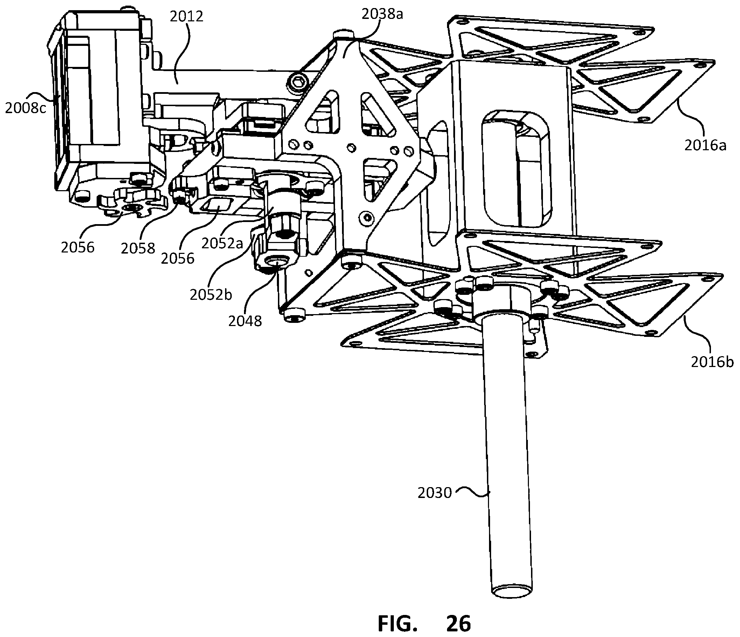

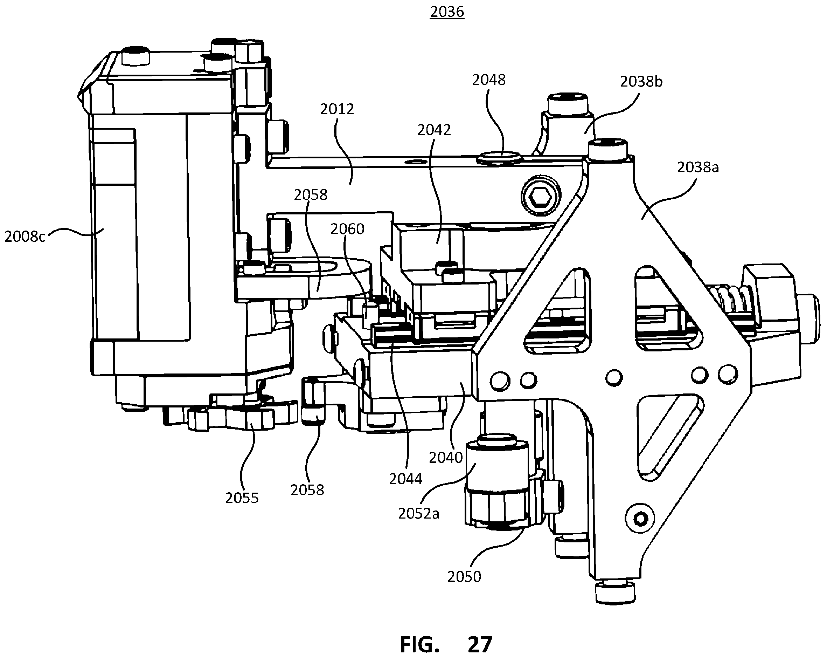

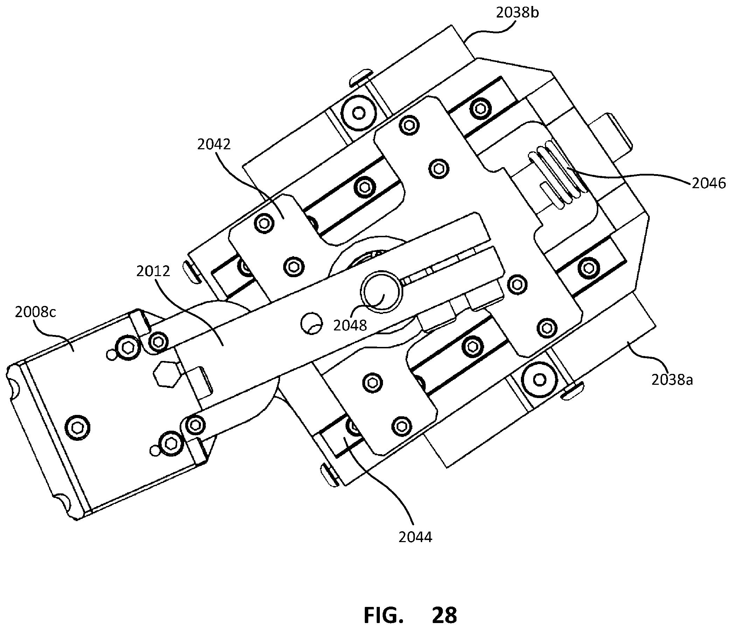

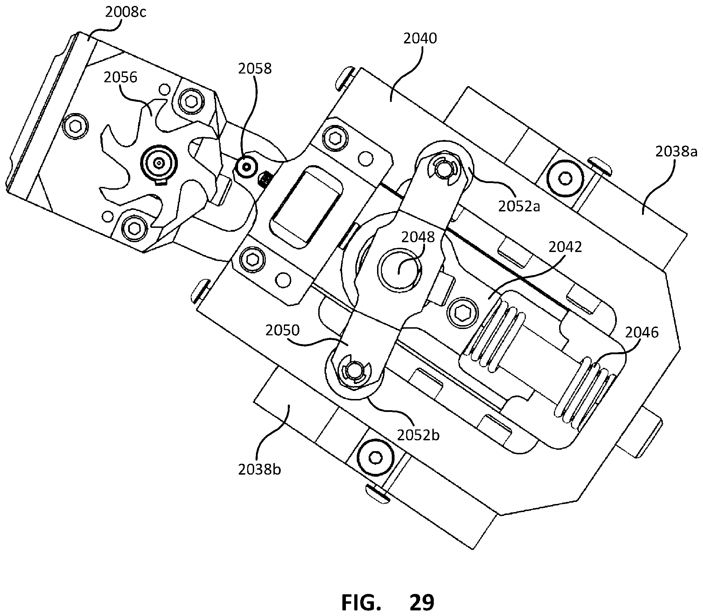

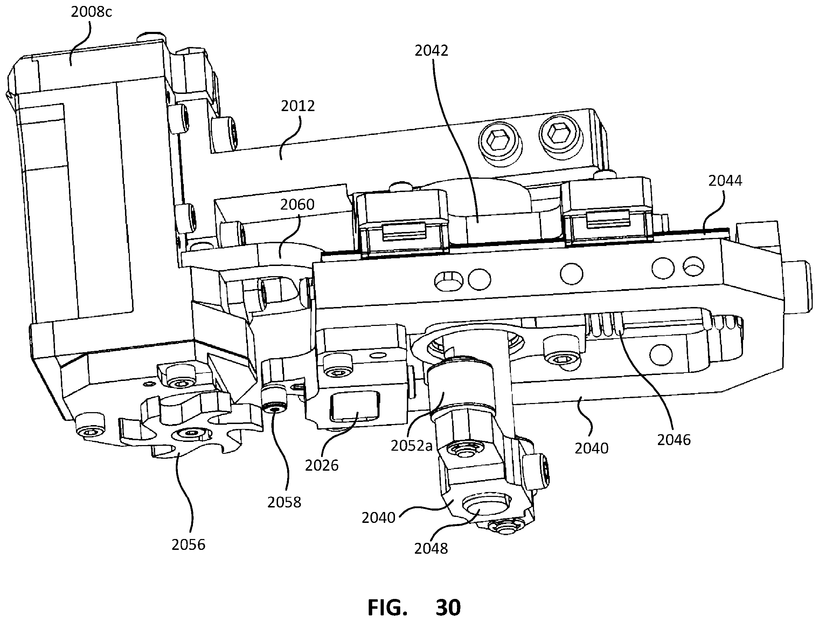

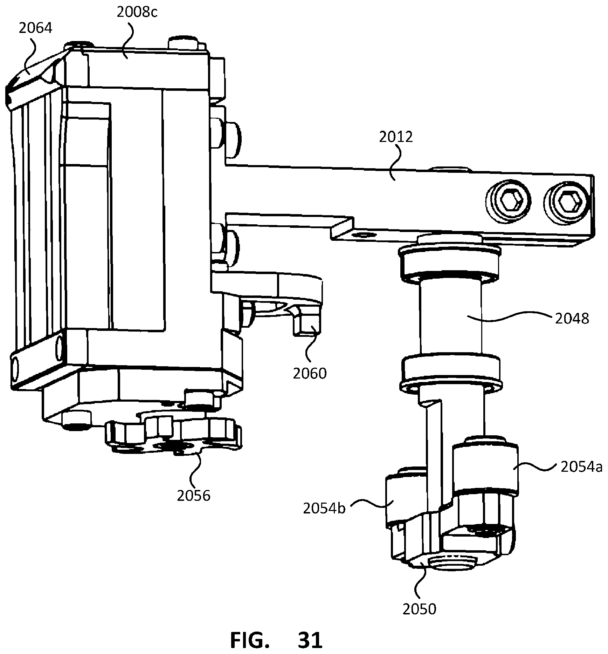

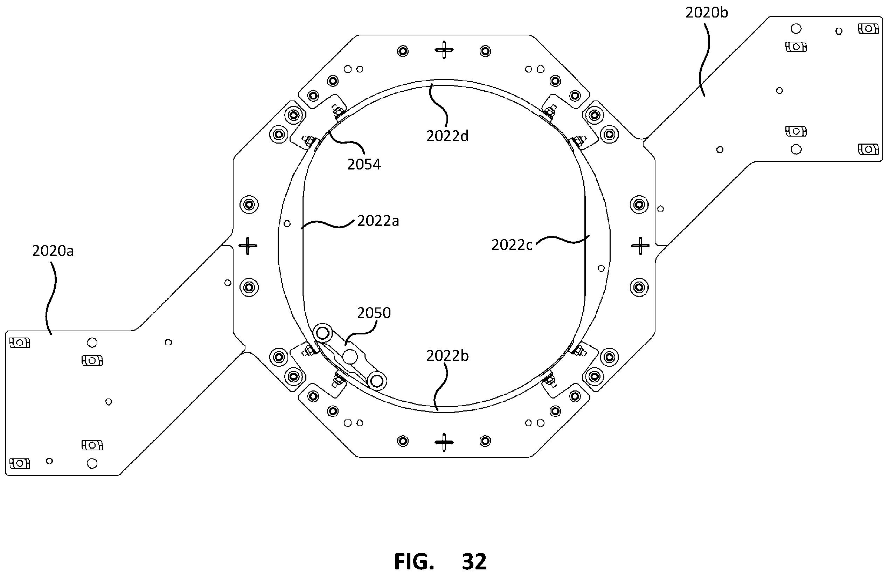

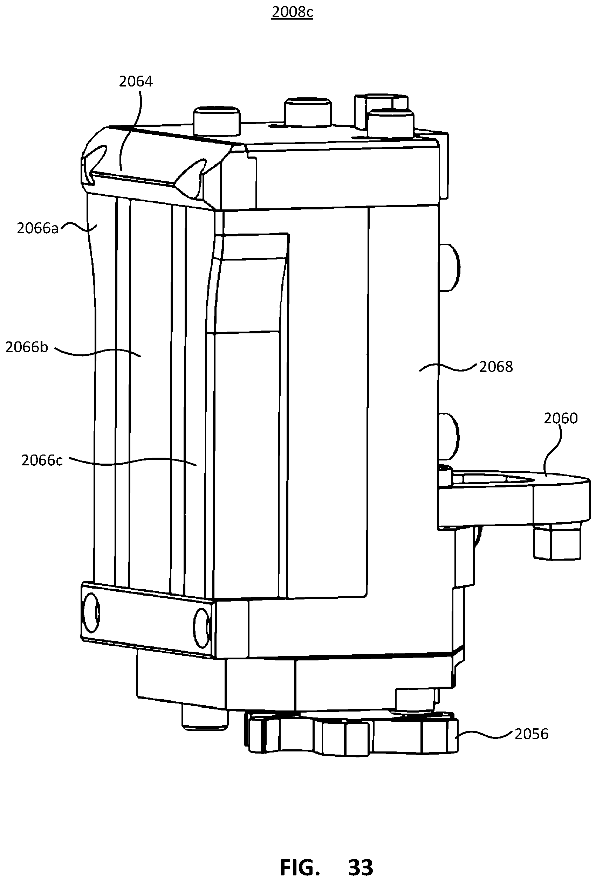

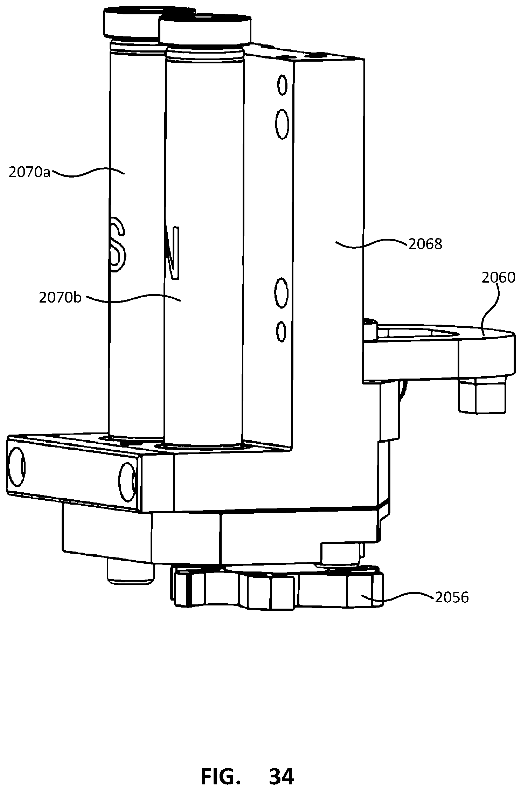

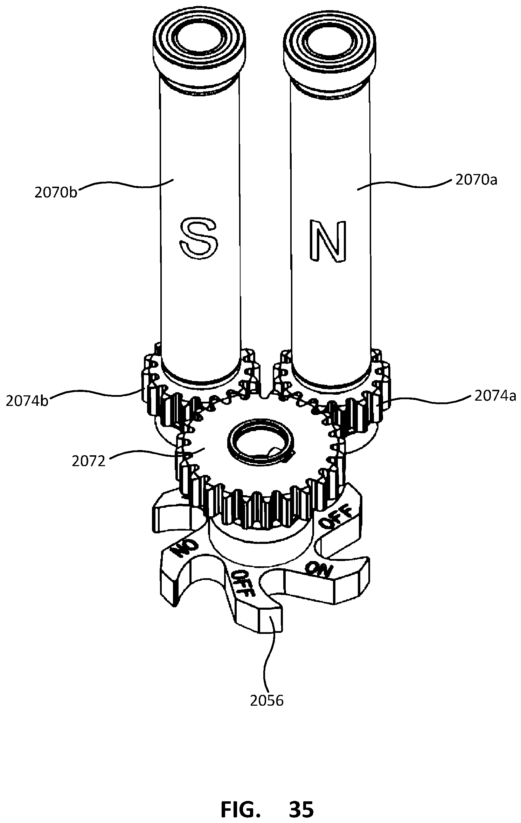

Figures 20 to 35 depict details of a diverter for moving shuttles between tracks. The linear motor conveyor system 2000 with diverter is depicted in Figures 20 and 21. Figure 22 depicts the rotatable diverter used in the system 2000. Figures 23 and 24 depict a stationary frame of the diverter. Figures 25 and 26 depict a rotating assembly of the diverter. Figures 27 to 31 depict details of a compliant mount of the diverter. Figure 32 depicts details of a cam profile and cam follower of the diverter. Figures 33 to 35 depict details of a magnetic diverter head of the diverter.

The system 2000 comprises two linear motor conveyor tracks 2002, 2004 with a rotatable diverter 2006 arranged between them. The diverter is able to move shuttles, such as shuttles 2008a..c, from one track to the other. In Figure 20, the diverter rotates in a clockwise direction and moves shuttles from the first track 2002 to the second track 2004. The diverter comprises a plurality of diverter heads 2010a...d (referred to generically as diverter head 2010) coupled to respective diverter arms 2012. It is possible for the diverter head to have more or fewer diverter heads. As the diverter rotates, the diverter heads will be aligned with a shuttle that is located at a transfer point on the track. The movement of the shuttles being diverted and the motion of the diverter can be controlled so that the motion of the shuttle and matches the motion of the diverter at the transfer point. As described in further detail below, the diverter head includes a switchable magnet that can be toggled at the transfer point. The magnet force of the switchable magnet may be sufficient to attract and retain the shuttle on the diverter head. A magnetic force may attract the shuttle to the track. The magnetic force of the diverter head may be sufficient to overcome the attractive force between the track and the shuttle. Similarly, the magnetic switch may be toggled in order to turn 'off' the magnetic force of the diverter head. When the magnetic force of the diverter head is turned off at the transition point, the shuttle may be attracted and retained on the track. Accordingly, the diverter head can divert shuttles from one track or track section to another track or track section. Although described as diverting shuttles from one track to another, it is possible for the diverter to operate in other manners. For example, the diverter may be used to remove a shuttle from a track and return it to the same location. This may be used to delay a particular shuttle on the track or reorder shuttles travelling on the track.

The diverter heads 2010a..d form part of a rotating assembly 2014 which is rotatably mounted within a stationary frame. Components of the rotating assembly may be covered by one or more shrouds. The rotating assembly may be mounted within a stationary frame 2018. The stationary frame may be formed from one or more components 2018a..c secured together. The stationary frame is rigidly mounted to each track by respective connection plates 2020a, 2020b (referred to collectively as connection plates 2020). The connection plates 2020 and the stationary frame provide sufficient strength and rigidity in order to reliably and precisely align components of the rotating diverter with the tracks. The stationary frame 2018 may include a plurality of individual cam profiles 2022a..2022d that are connected together to form an complete cam profile. The cam profile provides a generally circular surface that surrounds the rotating assembly. The cam profile is used to control movement of the diverter head as well as toggle the switchable magnet at specific locations around cam profile. The cam profile is depicted as a generally vertical surface. The cam profile can be formed from a number of separate cam profile sections that can be secured to the stationary frame. A continuous surface 2024 may be secured over top of the cam profiles in order to provide a continuous bearing surface that provides a reference surface for the vertical alignment of the diverter heads relative to the track sections. A vertical bearing 2026 bears against the continuous surface 2024 in order to control a vertical alignment of the diverter head relative to the continuous vertical bearing surface 2024.

The individual track sections may not be precisely aligned with each other so that the relative heights of the tracks differ. As depicted in Figure 20, the shuttles may include an overhanging feature that overhangs a top surface of the track. The overhanging portion of the shuttles may include one or more features that can be read by sensors arranged in the top of the tracks. In order to facilitate reading of the of the features by the sensors, the gap between the top of the track and the overhang may be small such that minor differences in the height of different tracks could cause a shuttle to collide with the track if the vertical alignment were not accounted for.

The stationary frame 2018 includes a mounting block with a drive shaft bearing that supports the rotating assembly within the stationary frame. A motor 2028 can be mounted to the stationary frame 2018 in order to drive the rotating assembly mounted within the stationary frame.

The rotating assembly 2014 comprises a drive shaft 2030 that passes through the drive shaft bearing and can be coupled to the motor 2028, possibly through one or more gears or connecting members 2032. A mounting structure 2034 is secured to the drive shaft and can be used to mount a compliant structure 2036 to the drive shaft. The compliant structure 2036 may be mounted to the mounting structure by upper and lower vertically compliant connectors 2016a, 2016b. The vertically compliant connectors may rigidly locate the compliant structure 2036 to the driver shaft while allowing some vertical movement of the compliant structure. The vertically compliant connectors may provide a vertical biasing force to bias the vertical movement of the compliant structure. The vertical biasing force may bias the compliant structure towards the vertical cam surface 2024, which ensures that the compliant structure remains a constant distance away from the vertical cam surface.

The compliant structure 2036 provides a mounting structure for the diverter head. The compliant structure can provide vertical and/or radial compliance for the diverter head. Further, the diverter head is pivotally mounted to the compliant structure and provides angular compliance to the diverter head. The angular, radial and/or vertical compliance allows the alignment of the diverter head to be precisely controlled relative to the tracks. The compliance allows shuttles to be diverted from one track to another even if the tracks are not precisely aligned with each other.

The compliant structure 2036 comprises side mounts 2038a,b that can be secured to the vertically compliant connectors 2016a,b. A mounting plate 2040 can be secured between the side mounts 2028a,b. The mounting plate 2040 can move vertically as a result of the vertically compliant connectors. A pivot block 2042 may be coupled to the mounting plate 2040 by one or more linear guides 2044. The linear guides 2044 may comprise linear guide rails or other similar structures that provide movement along one axis. The linear guides allow the pivot block to move in the radial direction. A radial biasing means 2046, depicted as a spring, can provide a radial biasing force for biasing the pivot block. The pivot block 2042 provides a mounting location for pivotally mounting the diverter arm 2012. The diverter arm 2012 is secured to the connecting rod 2048, for example using a split connection secured by a bolt or other fastener. The connecting rod 2048 passes through the pivot block and the mounting plate and is secured to a cam follower 2050.

The cam follower comprises a pair of bearings 2052a,b, which may be roller bearings, arranged on either side of the connection rod 2048. As depicted in Figure 32, the bearings of the cam follower bear against the cam profile 2022. The angle of the cam follower can change based on the cam profile. As the angle of the cam follower changes, the angle of the diverter arm also changes to match the cam follower.

As depicted in Figure 32, the cam profile 2022 may be formed from separate individual cam profiles 2022a..d connected together. Transition plates 2054 can join the individual cam profiles together and provide a continuous profile surface for the cam follower to bear against. Each cam profile may have a respective profile. Two of the cam profiles 2022a,c, which may be referred to as transfer cam profiles, depicted in Figure 32 are shaped to cause the angle of the cam follower, and so the diverter arm, to change as the cam follower rotates about the individual transfer cam profiles. Further, the transfer cam profile can also change the radial distance of the cam follower, and the diverter arm and head connected to the cam follower. The individual transfer cam profiles 2022a,c may be associated with transfer locations at which shuttles may be transferred from and to tracks. Additional cam profiles 2024b,d, which may be referred to as null cam profiles, may be arranged at locations at which shuttles are not transferred to/from tracks. The null cam profiles may be shaped such that the angle of the cam follower, relative to the drive shaft or other components connected to the drive shaft does not change as the cam follower rotates around the null cam profile. The null cam profile may also be shaped such that the radial distance of the cam follower does not change.

The rotating assembly 2014 has one or more diverter heads that can divert a shuttle from a track. The diverter heads are pivotally mounted to a compliant assembly which is connected to the drive shaft of the rotating assembly. The pivotal connection allows the angle of the diverter head to be changed in order to align with the shuttle at the location that the shuttle is transferred from the track to the diverter head, or vice versa. The angle of the diverter head can be controlled by the cam follower and cam profile. As the cam follower rotates through a transfer cam profile the angle of the diverter head can move through an arc relative to the compliant assembly and drive shaft. The diverter head can also be moved radially inward. The inward movement of the diverter head and the movement through the arc can cause a toggle gear 2056 to contact a toggle pin 2058 that is mounted on the compliant assembly as most clearly depicted in Figure 26. The movement of the diverter head relative to the toggle pin causes the toggle gear to rotate, which in turn can cause magnets to rotate and toggle the magnetic force on or off. The point at which the switchable magnet is toggled can be controlled by the shape of the cam profile. Since the cam profiles are rigidly mounted relative to the tracks, the position on the track at which shuttles can be transferred to or from the diverter head can be precisely determined. The diverter head may have a travel stop bar 2060 which can limit the movement of the diverter head by contacting a travel stop pin 2062 mounted on the compliant mount. The travel stop bar 2060 and travel stop pin 2062 can contact each other and prevent further motion of the diverter head. It is possible that the travel stop bar and/or the travel stop pin could be damaged when limiting further movement; however, it can provide an easier to replace component that protects other components from damage.

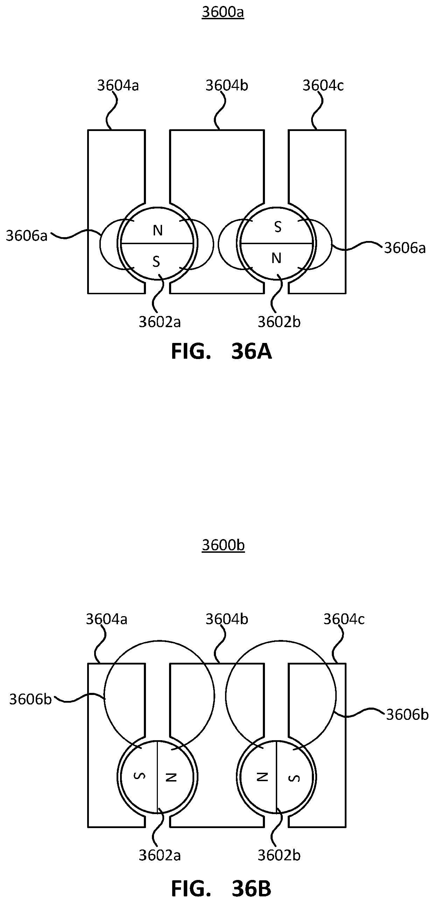

Details of the diverter head are depicted in Figures 33 to 35. The diverter head may include an alignment feature 2064 which can interact with a corresponding feature on the shuttle. The alignment feature may help to align the shuttle on the diverter head. The diverter head houses one or more rotatable magnets that combine with ferrous material 2066a..c, which act as magnetic flux concentrators to provide a switchable magnetic force. The diverter head may comprise a frame 2068 that provides a mounting structure for rotatable magnets 2070a,b. As depicted, a pair of magnets provide the switchable magnetic force. The rotatable magnets can be rotated simultaneously by the toggle gear 2056. The toggle gear may rotate a main gear 2072, which may in turn rotate respective satellite gears 2074a,b. Each of the satellite gears is connected to one of the rotatable magnets. As the toggle gear rotates, the pair of magnets rotate. Each rotation of the gear and magnets cause toggles the magnetic field on and off as depicted in Figures 36A and 36B

Figures 36A and 36B depict details of a switchable magnet of the magnetic diverter head. Figure 36A depicts the magnetic arrangement in an off position. In the off position, the magnets 3602a, 3602b are arranged so that the north and south poles are both arranged adjacent respective flux concentrators 3604a, 3604b, 3604c. In the off position, the magnetic flux is maintained substantially within the flux concentrators as depicted in Figure 36A and so the magnetic force does not extend out of the flux concentrators of the diverter head. In the on position, depicted in Figure 36B, the north and south poles are arranged such that they are not adjacent the same flux concentrator. As such, the magnetic flux travels out of the flux concentrator which extends the magnetic force outside of the flux concentrators of the diverter head. Accordingly, the magnetic force of a diverter head can be controlled by rotating the magnets by 90°.

In the preceding description, for purposes of explanation, numerous details are set forth in order to provide a thorough understanding of the embodiments. However, it will be apparent to one skilled in the art that these specific details may not be required. In other instances, well-known structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure or elements thereof can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A diverter for a linear motor conveyor system comprising:
a stationary frame coupled to a first track section the linear motor conveyor system; and
a rotating assembly rotatably mounted within the stationary frame, the rotating assembly comprising:
a diverter arm rotatably mounted within the rotating assembly to allow an angle of the diverter head relative to the rotating assembly to change as the rotating assembly rotates within the stationary frame; and
a diverter head comprising a switchable magnet engageable with a shuttle on the first track section, the diverter head arranged at a first end of the diverter arm.

2. The diverter of claim 1, wherein the switchable magnet comprises at least one rotatable magnet that is rotatable between a first orientation and a second orientation, wherein in the first orientation, a magnetic force provided by the switchable magnet is sufficient to retain the shuttle on the diverter head and in the second orientation, the magnetic force is not sufficient to retain the shuttle on the diverter head.

3. The diverter of claim 2, wherein the at least one rotatable magnet is rotated by a gear on the diverter head contacting a pin fixed to the rotating assembly as the diverter head moves through an arc relative to the rotating assembly.

4. The diverter of any one of claims 1 to 3, further comprising a cam follower connected to the diverter arm, wherein the angle of the diverter arm relative to the rotating assembly is controlled by a cam follower connected to the diverter arm contacting a cam profile on the stationary frame.

5. The diverter of claim 4, wherein the cam follower moves along the cam profile as the rotating assembly rotates.

6. The diverter of claim 4 or 5, wherein the cam follower comprises a pair of rollers that contact the cam profile, and wherein the cam follower is connected to the diverter arm by a connecting rod arranged between the pair of rollers.

7. The diverter of claim 6, wherein the cam profile comprises a plurality of connected individual cam profiles providing a continuous cam profile for the cam follower as the rotating assembly rotates through 360°, and wherein the individual cam profiles comprise one or more of:
a switching profile shaped to cause the angle of the diverter arm to rotate through an arc relative to the rotating assembly and toggle the switchable magnet at a point on the switching profile; and
a stationary profile shaped to prevent toggling the switchable magnet.

8. The diverter of any one of claims 4 to 7, wherein the rotating assembly further comprising:
a compliance mount coupling the diverter arm to a driving shaft of the rotating assembly, the compliance mount providing compliance to movement of the diverter arm along one or more axes of movement.

9. The diverter of claim 8, wherein the compliance mount comprises:
a horizontal compliance mount allowing movement of the diverter arm along a radial direction of the rotating assembly; and
a vertical compliance mount allowing movement of the diverter arm along a vertical axis.

10. The diverter of claim 9, wherein the horizontal compliance mount comprises:
a pivot support for the diverter arm mounted to a linear bearing; and
a biasing mechanism for biasing the pivot support in a bias direction along the linear bearing.

11. The diverter of claim 10, wherein the cam profile controls the movement of the pivot support along the bias direction.

12. The diverter of any one of claims 9 to 11, wherein the vertical compliance mount comprises a vertical biasing mechanism biasing the diverter arm in a vertical direction.

13. The diverter of claim 12, wherein the vertical compliance mount further comprises a vertical cam follower that contacts a vertical cam surface on the stationary frame to control vertical movement of the diverter arm in along the vertical axis.

14. The diverter of any one of claims 1 to 13, wherein the stationary frame is rigidly connected to the first track section.

15. A linear motor conveyor system comprising:
a linear motor conveyor track;
a plurality of shuttles on the linear motor conveyor track; and
a diverter according to any one of claims 1 to 14.
